# EUROPÄISCHE PATENTANMELDUNG

(11) **EP 0 742 118 A1**
(43) Veröffentlichungstag der Anmeldung: **13.11.1996**
(21) Anmeldenummer: 96106997.8
(22) Anmeldetag: 03.05.1996
(51) Int. Cl.: B60K 5/08, B60K 25/00, A62C 27/00

(54) **Kraftfahrzeug mit einem Nebenverbraucher, insbesondere Feuerwehrfahrzeug mit einer Löschpumpe**

(30) Priorität: 11.05.1995 DE 19517262
(71) Anmelder: Albert Ziegler GmbH & Co.KG, 89537 Giengen/Brenz (DE)
(72) Erfinder: Bubeck, Manfred Dr., 73066 Uhingen (DE)
(74) Vertreter: Vetter, Hans, Dipl.-Phys. Dr.

(57) **Zusammenfassung**

Es wird ein Kraftfahrzeug mit einem Nebenverbraucher (24) vorgeschlagen, insbesondere ein Feuerwehrfahrzeug mit einer Löschpumpe. Zwei Verbrennungsmotoren (15, 22) sorgen für dem Fahrbetrieb des Kraftfahrzeugs und den Antrieb des Nebenverbrauchers (24). Hierzu ist ein die beiden Verbrennungsmotoren (15, 22) und den Nebenverbraucher (24) verbindendes hydraulisches Antriebssystem mit einer Steuereinrichtung (26) vorgesehen, durch die der Fahrantrieb des Kraftfahrzeugs wahlweise durch einen der beiden oder durch beide Verbrennungsmotoren (15, 22) beaufschlagbar ist.

## Beschreibung

Die Erfindung betrifft ein Kraftfahrzeug mit einem Nebenverbraucher, insbesondere ein Feuerwehrfahrzeug mit einer Löschpumpe, und mit Zwei Verbrennungsmotoren für den Fahrantrieb des Kraftfahrzeugs und den Antrieb des Nebenverbrauchers.

Bei einem derartigen, aus der DE 35 09 313 bekannten Feuerwehrfahrzeug wird das Fahrzeug selbst und die Löschpumpe jeweils durch einen eigenen separaten Motor angetrieben. Dies stellt technisch die einfachste Lösung dar.

Weiterhin sind aus der DE 31 42 667 und 31 42 668 Feuerwehrfahrzeuge bekannt, bei denen ein einziger Verbrennungsmotor über eine Antriebsverzweigung sowohl das Fahrzeug selbst als auch die Löschpumpe antreiben kann. Fällt dieser Motor infolge eines Defekts oder aus sonstigen Gründen aus, so ist das Feuerwehrfahrzeug praktisch funktionslos.

Eine Aufgabe der vorliegenden Erfindung besteht darin, ein Kraftfahrzeug mit einem Nebenverbraucher der eingangs genannten Gattung zu schaffen, bei dem auch bei Ausfall eines zunächst für den Fahrantrieb vorgesehenen Verbrennungsmotors der Fahrbetrieb und der Betrieb des Nebenverbrauchers weiterhin möglich ist.

Diese Aufgabe wird erfindungsgemäß dadurch gelöst, daß ein die beiden Verbrennungsmotoren und den Nebenverbraucher verbindendes hydraulisches Antriebssystem mit einer Steuereinrichtung vorgesehen ist, durch die der Fahrantrieb des Kraftfahrzeugs wahlweise durch einen der beiden oder durch beide Verbrennungsmotoren beaufschlagbar ist.

Der Vorteil des erfindungsgemäßen Kraftfahrzeugs besteht insbesondere darin, daß bei Ausfall eines zunächst für den Fahrantrieb vorgesehenen Verbrennungsmotors der andere Verbrennungsmotor mittels der Steuereinrichtung und über das hydraulische Antriebssystem auf den Fahrantrieb umgeschaltet werden kann. Dadurch ist die Gefahr praktisch ausgeschlossen, daß insbesondere ein Feuerwehrfahrzeug durch den Ausfall eines Antriebsmotors ebenfalls mitausfällt. Ein weiterer wesentlicher Vorteil besteht noch darin, daß beim Anfahren beide Verbrennungsmotoren mit dem Fahrantrieb gekoppelt werden können, so daß eine erhöhte Leistung und eine entsprechend große Beschleunigung des Fahrzeugs erzielbar sind. Dies ist insbesondere für Flugplatz-Löschfahrzeuge von Bedeutung, bei denen im allgemeinen Mindestanforderungen an die Fahrzeugbeschleunigung gestellt werden. Da die Löschpumpe während der Fahrt zum Brandplatz im allgemeinen nicht benötigt wird, können beide Verbrennungsmotoren ausschließlich für den Fahrantrieb verwendet werden. Danach kann zumindest einer der beiden Verbrennungsmotoren mittels der Steuereinrichtung mit der Löschpumpe zu deren Betätigung gekoppelt werden. Durch die Verwendung zweier Verbrennungsmotoren, die zur Erzielung einer großen Beschleunigung beide mit dem Fahrantrieb gekoppelt werden können, tritt zudem noch der Vorteil auf, daß bei den üblichen Dimensionierungen noch zwei Lkw-Serienmotoren eingesetzt werden können, während dagegen bei Verwendung eines einzigen Verbrennungsmotors für die erforderlichen Beschleunigungen eines Flugplatz-Löschfahrzeugs dieser so groß dimensioniert sein müßte, daß eine im Vergleich zu zwei Serienmotoren wesentlich kostspieligere Einzelanfertigung erforderlich wäre. Schließlich hat das die Verbrennungsmotoren und den Nebenverbraucher verbindende hydraulische Antriebssystem noch den Vorteil, daß eine Anpassung an die jeweils erforderlichen Drehzahlen, die häufig bei einem Nebenverbraucher einerseits und für den Antrieb andererseits sehr unterschiedlich sein können, sehr leicht möglich ist.

Durch die in den Unteransprüchen aufgeführten Maßnahmen sind vorteilhafte Weiterbildungen und Verbesserungen des im Anspruch 1 angegebenen Kraftfahrzeugs möglich.

In einer vorteilhaften konstruktiven Ausgestaltung ist der erste Verbrennungsmotor über eine Antriebsverzweigung zum einen mit einem Fahrgetriebe des Fahrantriebs für das Kraftfahrzeug und zum anderen mit einem wenigstens als Hydraulikmotor ausgebildeten ersten Hydraulikaggregat verbunden, der zweite Verbrennungsmotor ist an ein als Hydraulikpumpe ausgebildetes zweites Hydraulikaggregat und der Nebenverbraucher an ein als Hydraulikmotor ausgebildetes drittes Hydraulikaggregat angeschlossen, und die Hydraulikaggregate sind über durch die Steuereinrichtung schaltbare Hydraulikleitungen miteinander verbunden. Bei dieser Ausgestaltung ist der erste Verbrennungsmotor zunächst für den Fahrantrieb vorgesehen, während der zweite Verbrennungsmotor den Nebenverbraucher antreibt, beispielsweise die Löschpumpe eines Feuerwehrfahrzeugs. In der Beschleunigungsphase kann nun der erste Verbrennungsmotor hydraulisch vom Nebenverbraucher abgekoppelt werden, um dann ausschließlich den an der Antriebsverzweigung angeschlossenen Hydraulikmotor anzutreiben. Dadurch sind leistungsmäßig beide Verbrennungsmotoren an die Antriebsverzweigung angekoppelt und treiben gemeinsam das Fahrgetriebe an. Nach der Beschleunigungs- bzw. Fahrphase kann dann wieder eine Abkopplung erfolgen, so daß der zweite Verbrennungsmotor dann wieder den Nebenverbraucher antreibt. Fällt der erste Verbrennungsmotor aus, so kann der zweite Verbrennungsmotor in der bereits geschilderten Weise durch Antreiben des Hydraulikmotors an der Antriebsverzweigung das Fahrgetriebe für den Fahrantrieb allein antreiben. Nach der Fahrt erfolgt dann eine Umschaltung auf den Nebenverbraucher, wobei selbstverständlich der zweite Verbrennungsmotor oder der erste Verbrennungsmotor auch allein sowohl das Kraftfahrzeug als auch zusätzlich den Nebenverbraucher antreiben können.

In einer vorteilhaften Ausgestaltung kann durch die Steuereinrichtung der Nebenverbraucher wahlweise durch einen der beiden Verbrennungsmotoren oder durch beide Verbrennungsmotoren gleichzeitig beaufschlagt werden. Hierdurch sind alle möglichen Antriebskombinationen und Modifikationen möglich. Um dies technisch zu realisieren, ist das erste Hydraulikaggregat als Kombination eines Hydraulikmotors mit einer Hydraulikpumpe ausgebildet, so daß die Antriebsverzweigung über das erste Hydraulikaggretat Leistung abgeben oder aufnehmen kann.

Zwischen dem ersten Verbrennungsmotor und der Antriebsverzweigung ist zweckmäßigerweise eine Kupplung angeordnet, damit bei einem Ausfall des ersten Verbrennungsmotors und einer Antriebskonfiguration, bei der der zweite Verbrennungsmotor über die Antriebsverzweigung das Fahrgetriebe antreibt, nicht der erste Verbrennungsmotor unnötigerweise mitangetrieben wird und dadurch Leistung verbraucht. Diese Kupplung kann jedoch auch dazu benutzt werden, den ersten Verbrennungsmotor bei Startschwierigkeiten mittels des zweiten Verbrennungsmotors zu starten.

Die Antriebsverzweigung ist auch noch vorzugsweise über wenigstens eine Kupplung mit dem Fahrgetriebe und/oder dem ersten Hydraulikaggregat verbunden, damit das erste Hydraulikaggregat abgekoppelt werden kann, wenn der Antrieb des Fahrzeugs allein durch den ersten Verbrennungsmotor erfolgen soll und der zweite Verbrennungsmotor allein den Nebenverbraucher antreiben soll. Eine weitere Kupplung, die die Antriebsverzweigung mit dem Fahrgetriebe verbindet, kann vorzugsweise als übliche Fahrkupplung verwendet werden. Zumindest im Falle eines Automatikgetriebes kann diese Kupplung auch entfallen.

Die Steuereinrichtung steht zweckmäßigerweise mit der oder den Kupplungen in Wirkverbindung, so daß alle Funktionen über eine zentrale Steuereinrichtung ausgelöst werden können. Die Steuereinrichtung besitzt dabei manuell oder rechnergesteuerte Ventile in den Hydraulikleitungen, das heißt, die Steuerung des Hydrauliksystems kann rechnergesteuert oder manuell, beispielsweise über Einzelschalter, erfolgen.

In einer alternativen Ausgestaltung, bei der eine Antriebsverzweigung entfallen kann, sind die beiden Verbrennungsmotoren jeweils mit einem zumindest als Hydraulikpumpe ausgebildeten Hydraulikaggregat und der Nebenverbraucher sowie ein Fahrgetriebe oder Antriebsstrang des Fahrantriebs für das Kraftfahrzeug jeweils mit einem als Hydraulikmotor ausgebildeten Hydraulikaggregat verbunden, wobei die Hydraulikaggregate über durch die Steuereinrichtung schaltbare Hydraulikleitungen miteinander verbunden sind. Diese Anordnung, die ein viertes Hydraulikaggregat erforderlich macht, hat neben der Einsparung einer Antriebsverzweigung den Vorteil, daß das Fahrgetriebe nicht mehr mit einem der Verbrennungsmotoren über eine Welle gekoppelt sein muß, so daß für die Anordnung der Verbrennungsmotoren im Kraftfahrzeug mehr Variationsmöglichkeiten gegeben sind.

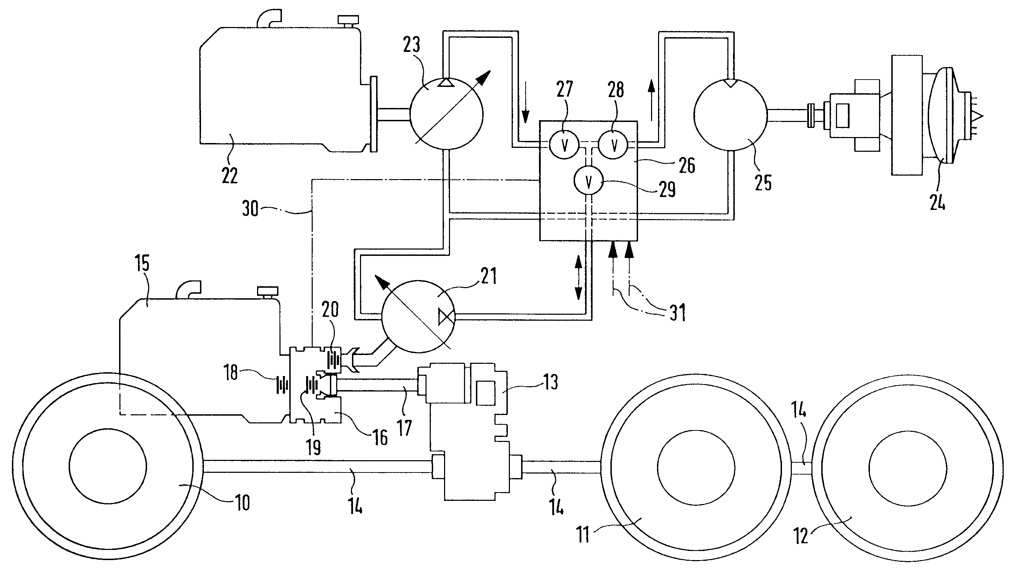

Eine Ausführungsbeispiel der Erfindung ist in der Zeichnung dargestellt und in der nachfolgenden Beschreibung näher erläutert. Die einzige Figur zeigt eine schematische schaltungsmäßige Darstellung eines Kraftfahrzeugs mit zwei Verbrennungsmotoren und einer Löschpumpe als Nebenverbraucher.

Im einzigen Ausführungsbeispiel ist ein als Feuerwehrfahrzeug ausgebildetes Kraftfahrzeug schematisch durch drei Radpaare 10 - 12 dargestellt, wobei ein Fahrgetriebe 13, das ein Schaltgetriebe oder ein Automatikgetriebe sein kann, ausgangsseitig über Antriebswellen 14 die Radpaare 10 - 12 antreibt. Neben einem Allradantrieb kann selbstverständlich auch der Antrieb nur eines oder zweier Radpaare vorgesehen sein.

Ein erster Verbrennungsmotor 15 treibt das Fahrgetriebe 13 über eine Antriebsverzweigung 16 und eine weitere Antriebswelle 17 an. Dabei ist eine erste Kupplung 18 zwischen dem ersten Verbrennungsmotor 15 und der Antriebsverzweigung 16, eine zweite Kupplung 19 an der Anschlußseite der Antriebswelle 17 und eine dritte Kupplung 20 an einem weiteren Anschluß der Antriebsverzweigung 16 vorgesehen, der mit einem ersten Hydraulikaggregat 21 verbunden ist, das als Kombination eines Hydraulikmotors mit einer Hydraulikpumpe ausgebildet ist.

Ein zweiter Verbrennungsmotor 22 ist an ein zweites, als Hydraulikpumpe ausgebildetes Hydraulikaggregat 23 angeschlossen. Ein als Löschpumpe ausgebildeter Nebenverbraucher 24 ist mit einem dritten, als Hydraulikmotor ausgebildeten Hydraulikaggregat 25 verbunden. Die drei Hydraulikaggregate 21, 23 und 25 sind über ein Hydrauliksystem miteinander verbunden. Dieses Hydrauliksystem besteht aus Hydraulikleitungen, die über eine Steuereinrichtung 26 gesteuert werden. Diese Steuereinrichtung 26 enthält drei jeweils über einen Anschluß miteinander verbundene Hydraulikventile 27 - 29, die beispielsweise als Magnetventile ausgebildet sein können. Dabei ist der Ausgang des zweiten Hydraulikaggregats 23 mit dem ersten Hydraulikventil 27, der Eingang des dritten Hydraulikaggregats 25 mit dem zweiten Hydraulikventil 28 und der kombinierte Eingang/Ausgang des ersten Hydraulikaggregats 21 mit dem dritten Hydraulikventil 29 verbunden. Die jeweils zweiten Hydraulikanschlüsse der Hydraulikaggregate 21, 23 und 25 sind über Hydraulikleitungen miteinander verbunden. Eine strichpunktierte Linie 30 symbolisiert die Steuerung der drei Kupplungen 18 - 20 über die Steuereinrichtung 26. Eingänge 31 der Steuereinrichtung 26 dienen zur Zuführung von Steuerbefehlen, beispielsweise für nicht dargestellte Schalter, eine Tastatur, einen Rechner od.dgl.

Im Normalbetrieb treibt der erste Verbrennungsmotor 15 die Radpaare 10 - 12 des Fahrzeugs über das Fahrgetriebe 13 an. Hierzu sind die Kupplungen 18, 19 eingekuppelt, und die Kupplung 20 ist ausgekuppelt, so daß das erste Hydraulikaggregat 21 antriebsmäßig vom ersten Verbrennungsmotor 15 gelöst ist. Das Hydraulikventil 29 ist geschlossen, und die Hydraulikventile 27, 28 sind geöffnet, so daß der zweite Verbrennungsmotor 22 über das Hydrauliksystem, das heißt über die Hydraulikaggregate 23, 25, den als Löschpumpe ausgebildeten Nebenverbraucher 24 antreibt. Um einen Fahrantrieb mit höherer Leistung und eine bessere Beschleunigung des Fahrzeugs zu erzielen, erfolgt vor allem in der Anfahrphase eine Umschaltung des Hydrauliksystems durch die Steuereinrichtung 26. Hierzu ist das Hydraulikventil 28 geschlossen, während die Hydraulikventile 27, 29 geöffnet sind. Weiterhin ist die Kupplung 20 eingekuppelt. Bei dieser Konfiguration treibt der zweite Verbrennungsmotor 22 über das zweite Hydraulikaggregat 23 das erste Hydraulikaggregat 21 an, wobei die erzeugte Leistung über die Antriebsverzweigung 16 so eingespeist wird, daß die Leistungen beider Verbrennungsmotoren 15, 22 auf das Fahrgetriebe 13 einwirken. Dies ist unproblematisch, da die Löschpumpe im allgemeinen in der Beschleunigungsphase des Fahrzeugs, jedoch auch meistens noch im Fahrbetrieb nicht benötigt wird. Erreicht das Löschfahrzeug den Einsatzort, also die Brandstelle, so wird auf die zuvor beschriebene Konfiguration des Hydraulikystems zurückgeschaltet, und der als Löschpumpe ausgebildete Nebenverbraucher 24 wird nun durch den zweiten Verbrennungsmotor 22 angetrieben.

Falls der als Löschpumpe ausgebildete Nebenverbraucher 24 für entsprechend größere Leistungen ausgelegt ist und diese im Einzelfall auch benötigt, so kann der Antrieb auch durch beide Verbrennungsmotoren 15, 22 erfolgen. Hierzu werden alle drei Hydraulikventile 27 - 29 geöffnet, die Kupplungen 18, 20 sind eingekuppelt, und die Kupplung 19 ist ausgekuppelt. Das Hydraulikaggregat 21 arbeitet jetzt als Hydraulikpumpe, wobei die Pumpleistung des ebenfalls als Hydraulikpumpe ausgelegten zweiten Hydraulikaggregats 23 addiert wird. Falls das Fahrzeug bei dieser Betriebsart bewegt werden muß, so kann auch die Kupplung 19 eingekuppelt werden, so daß sich die vom ersten Verbrennungsmotor 15 abgegebene Leistung auf das erste Hydraulikaggregat 21 und das Fahrgetriebe 13 aufteilt.

Schließlich ist noch der Fall zu betrachten, daß einer der beiden Verbrennungsmotoren 15, 22 ausfällt, also z.B. nicht anspringt. Im Falle, daß dies bei dem ersten Verbrennungsmotor 15 der Fall ist, werden für den Fahrbetrieb die Hydraulikventile 27 - 29 geöffnet, während das Hydraulikventil 28 geschlossen bleibt. Das erste Hydraulikaggregat 21 arbeitet jetzt als Hydraulikmotor. Die Kupplungen 19 und 20 sind eingekuppelt, während die Kupplung 18 ausgekuppelt ist. Hierdurch wird das Fahrgetriebe 13 durch den zweiten Verbrennungsmotor 22 angetrieben. Zunächst kann allerdings noch versucht werden, durch Einkuppeln der Kupplung 18 zu versuchen, den ersten Verbrennungsmotor 15 durch den zweiten Verbrennungsmotor 22 bzw. das erste Hydraulikaggregat 21 zu starten. Erst wenn dieser Versuch mißlingt, wird die Kupplung 18 ausgekuppelt, damit der erste Verbrennungsmotor 15 nicht unnötig mitbewegt wird und Leistung verbraucht. Bei Erreichen des Brandplatzes wird dann das Hydraulikventil 29 geschlossen und das Hydraulikventil 28 geöffnet. Nunmehr wird der Nebenverbraucher 24 durch den zweiten Verbrennungsmotor 22 angetrieben. Bei Bedarf ist es selbstverständlich auch möglich, den Nebenverbraucher 24 und das Fahrgetriebe 13 gleichzeitig durch den zweiten Verbrennungsmotor 22 anzutreiben, indem alle Hydraulikventile 27 - 29 geöffnet werden.

Im umgekehrten Fall, also bei Ausfall des Verbrennungsmotors 22, wird das Hydraulikventil 27 geschlossen, und die Hydraulikventile 28, 29 sind geöffnet. Das erste Hydraulikaggregat 21 arbeitet in diesem Fall als Hydraulikpumpe. Für den reinen Fahrbetrieb ist die Kupplung 20 ausgekuppelt, so daß das erste Hydraulikaggregat 21 und damit der als Löschpumpe ausgebildete Nebenverbraucher 24 nicht mitbewegt werden. Die Leistung des ersten Verbrennungsmotors 15 wird dann ausschließlich dem Fahrgetriebe 13 zugeführt. Wird der Nebenverbraucher 24 benötigt, so braucht lediglich die Kupplung 20 eingekuppelt zu werden, wobei dann die Kupplung 19 ausgekuppelt werden kann, wenn kein Fahrantrieb benötigt wird, oder eingekuppelt bleibt, wenn gleichzeitig ein Fahrbetrieb und ein Betrieb des Nebenverbrauchers 24 erwünscht sind. Im allgemeinen sind für den Nebenverbraucher 24 und das Fahrgetriebe 13 unterschiedliche Antriebsdrehzahlen erforderlich. Durch das Hydrauliksystem und entsprechende Auslegungen der Hydraulikaggregate ist diese Anpassung an die unterschiedlichen Drehzahlen jedoch problemlos möglich.

Es ist auch möglich, auf die Kupplung 20 zu verzichten und das An- bzw. Abkoppeln des Hydraulikaggregats 21 durch die Hydraulikregelung zu bewirken.

In einer alternativen Ausgestaltung kann auch das zweite Hydraulikaggregat 23 als Kombination einer Hydraulikpumpe mit einem Hydraulikmotor ausgebildet sein. Hierdurch ergibt sich die zusätzliche Möglichkeit, bei Startschwierigkeiten des zweiten Verbrennungsmotors 22 diesen mit Hilfe des ersten Verbrennungsmotors 15 zu starten oder dies zumindest zu versuchen.

In einer weiteren, nicht dargestellten alternativen Ausführungsform kann unter Wegfall der Antriebsverzweigung 16 und der Antriebswelle 17 das Fahrgetriebe 13 oder die Antriebswellen 14 direkt durch einen Hydraulikmotor angetrieben werden, der an das hydraulische System angeschlossen ist. Das erste Hydraulikaggregat 21 wird dann direkt vom ersten Verbrennungsmotor 15 angetrieben, wie dies auch beim zweiten Hydraulikaggregat 23 und dem zweiten Verbrennungsmotor 22 der Fall ist. Die Leistungen der beiden Verbrennungsmotoren 15, 22 können dann über die Steuereinrichtung 26 in ähnlicher Weise wie beim dargestellten Ausführungsbeispiel auf das dritte Hydraulikaggregat 25 zum Antrieb des Nebenverbrauchers 24 oder das zusätzliche Hydraulikaggregat für den Fahrzeugantrieb verteilt werden.

In einer praktischen Ausführungsform kann die Leistung des ersten Verbrennungsmotors beispielsweise 390 kW und die Leistung des zweiten Verbrennungsmotors 250 kW betragen. Die Hydraulikaggregate sind beispielsweise für einen Durchsatz von 500 l/min bei einer Maximaldrehzahl von 2100 min⁻¹ ausgelegt.

## Patentansprüche

1. Kraftfahrzeug mit einem Nebenverbraucher, insbesondere ein Feuerwehrfahrzeug mit einer Löschpumpe, und mit zwei Verbrennungsmotoren für den Fahrantrieb des Kraftfahrzeugs und den Antrieb des Nebenverbrauchers, dadurch gekennzeichnet, daß ein die beiden Verbrennungsmotoren (15, 22) und den Nebenverbraucher (24) verbindendes hydraulisches Antriebssystem mit einer Steuereinrichtung (26) vorgesehen ist, durch die der Fahrantrieb des Kraftfahrzeugs wahlweise durch einen der beiden oder durch beide Verbrennungsmotoren (15, 22) beaufschlagbar ist.

2. Kraftfahrzeug nach Anspruch 1, dadurch gekennzeichnet, daß der erste Verbrennungsmotor (15) über eine Antriebsverzweigung (16) zum einen mit einem Fahrgetriebe (13) des Fahrantriebs für das Kraftfahrzeug und zum anderen mit dem hydraulischen Antriebssystem gekoppelt ist.

3. Kraftfahrzeug nach Anspruch 2, dadurch gekennzeichnet, daß die Antriebsverzweigung (16) mit einem wenigstens als Hydraulikmotor ausgebildeten ersten Hydraulikaggregat (21) verbunden ist, daß der zweite Verbrennungsmotor (22) an ein als Hydraulikpumpe ausgebildetes zweites Hydraulikaggregat (23) und der Nebenverbraucher (24) an ein als Hydraulikmotor ausgebildetes drittes Hydraulikaggregat (25) angeschlossen ist und daß die Hydraulikaggregate (21, 23, 25) über durch die Steuereinrichtung (26) schaltbare Hydraulikleitungen miteinander verbunden sind.

4. Kraftfahrzeug nach Anspruch 2 oder 3, dadurch gekennzeichnet, daß das erste Hydraulikaggregat (21) als Kombination eines Hydraulikmotors mit einer Hydraulikpumpe ausgebildet ist.

5. Kraftfahrzeug nach einem der Ansprüche 2 bis 4, dadurch gekennzeichnet, daß zwischen dem ersten Verbrennungsmotor (15) und der Antriebsverzweigung (16) eine Kupplung (18) angeordnet ist.

6. Kraftfahrzeug nach einem der Ansprüche 2 bis 5, dadurch gekennzeichnet, daß die Antriebsverzweigung (16) über wenigstens eine Kupplung (16, 20) mit dem Fahrgetriebe (13) und/oder dem ersten Hydraulikaggregat (21) verbunden ist.

7. Kraftfahrzeug nach Anspruch 5 oder 6, dadurch gekennzeichnet, daß die Steuereinrichtung (26) mit der oder den Kupplungen (18 - 20) in Wirkverbindung steht.

8. Kraftfahrzeug nach Anspruch 1, dadurch gekennzeichnet, daß die beiden Verbrennungsmotoren (15, 22) jeweils mit einem als Hydraulikpumpe ausgebildeten Hydraulikaggregat und der Nebenverbraucher sowie ein Fahrgetriebe oder Antriebsstrang des Fahrantriebs für das Kraftfahrzeug jeweils mit einem als Hydraulikmotor ausgebildeten Hydraulikaggregat verbunden sind und daß die Hydraulikaggregate über durch die Steuereinrichtung schaltbare Hydraulikleitungen miteinander verbunden sind.

9. Kraftfahrzeug nach einem der vorhergehenden Ansprüche, dadurch gekennzeichnet, daß durch die Steuereinrichtung (26) der Nebenverbraucher (24) wahlweise durch einen der beiden Verbrennungsmotoren (15, 22) beaufschlagbar ist.

10. Kraftfahrzeug nach Anspruch 9, dadurch gekennzeichnet, daß durch die Steuereinrichtung (26) der Nebenverbraucher (24) wahlweise durch beide Verbrennungsmotoren (15, 22) beaufschlagbar ist.

11. Kraftfahrzeug nach einem der vorhergehenden Ansprüche, dadurch gekennzeichnet, daß die Steuereinrichtung (26) manuell oder rechnergesteuerte Ventile (27 - 29) in den Hydraulikleitungen besitzt.
